# EUROPÄISCHE PATENTSCHRIFT

(11) **EP 4 047 340 B1**
(45) Veröffentlichungstag und Bekanntmachung des Hinweises auf die Patenterteilung: **01.01.2025**
(21) Anmeldenummer: 22155492.6
(22) Anmeldetag: 07.02.2022
(51) Int. Cl.: G01M 1/14, G01M 1/30, B25B 11/02, B25H 1/00

(54) **VORRICHTUNG ZUR AUFNAHME UND ZUM SPANNEN EINES ROTORLAGERS UND AUSWUCHTMASCHINE MIT EINER SOLCHEN VORRICHTUNG**
DEVICE FOR RECEIVING AND TENSIONING A ROTOR BEARING AND BALANCING MACHINE COMPRISING SUCH A DEVICE
DISPOSITIF DE LOGEMENT ET DE SERRAGE D'UN PALIER DE ROTOR ET MACHINE À ÉQUILIBRER DOTÉE D'UN TEL DISPOSITIF

(30) Priorität: 18.02.2021 DE 102021103901
(43) Veröffentlichungstag der Anmeldung: 24.08.2022
(73) Patentinhaber: Schenck RoTec GmbH, 64293 Darmstadt (DE)
(72) Erfinder: Kreuzer, Sebastian, 64293 Darmstadt (DE)
(74) Vertreter: Haarpatent Patentanwälte Krämer Meyer

(56) Entgegenhaltungen:
- DE-A1- 102005 023 086
- DE-A1- 102014 106 334
- DE-A1- 102016 208 527
- US-A- 2 123 443

## Beschreibung

Die Erfindung betrifft eine Vorrichtung zur Aufnahme und zum Spannen eines Rotorlagers mit wenigstens einem quer zu einer Lagerachse des Rotorlagers liegenden Lagerbock und einem zur Aufnahme des Rotorlagers ausgebildeten Lagerelement. Ferner betrifft die Erfindung eine Auswuchtmaschine mit einer derartigen Spannvorrichtung.

Auswuchtmaschinen dienen zum Messen und Ausgleichen der Unwucht von Rotoren und werden in der Regel für verschiedene Rotoren eingesetzt, die sich in Bezug auf die Durchmesser und auch die axiale Lage ihrer Lager voneinander unterscheiden. Ein typisches Beispiel hierfür sind für verschiedene Motoren bestimmte Kurbelwellen, die unterschiedliche Hauptlagerdurchmesser, verschiedene Teilungen und verschiedene Längen haben können. Für das präzise Ausgleichen einer vorhandenen Unwucht muss der jeweilige Rotor an seinen Lagerflächen in einer zur Lagerachse der Auswuchtmaschine zentrierten Lage aufgenommen werden. Die Aufnahme erfolgt durch Lagerelemente einer Lagereinrichtung, wobei die Lagerelemente zur exakten Zentrierung des Rotors jeweils an den Durchmesser der Rotorlager angepasst sein müssen. Gespannt werden die Rotoren durch entsprechende Spannvorrichtungen, bei denen das Rotorlager zum Beispiel durch Spannbolzen gehalten wird, die in Aufnahmen in dem Rotorlager eingreifen. Die Spannbolzen müssen in der Regel manuell eingebracht und wieder entfernt werden.

Aus EP 0 803 720 A2 ist eine Unwuchtmessstation zur Bestimmung der Unwucht von Rotoren bekannt, die mehrere Lagerstellen aufweist, die auf einer Schwingbrücke abgestützte Lagereinrichtungen zur rotierbaren Lagerung des Rotors aufweist.

Aus US 3 090 237 ist eine Einrichtung zum Auswuchten von Rotoren bekannt, bei der zwei Lagerständer an einer beliebigen Stelle längs einer sich in Achsrichtung erstreckenden Maschine befestigt werden können.

Eine aus DE 103 16 767 A1 bekannte Unwuchtmesseinrichtung weist zur Aufnahme von Rotorumfangsabschnitten eine Lagereinrichtung mit offenen fluidversorgten Lagerschalen und den Rotorendflächen zugeordneten fluidversorgten Lagerplatten auf. Zur Anpassung an verschiedene Rotortypen sind die Lagerschalen und die Lagerplatten austauschbar an Trägern befestigt, die an einer Lagerbrücke angeordnet sind.

DE 10 2016 208527 A1 beschreibt eine Halteeinrichtung zum Halten einer eine Innenwelle und eine koaxial dazu angeordnete Außenwelle aufweisenden Nockenwelle. Die Halteeinrichtung weist zumindest drei Spannbacken auf, wovon zumindest ein Spannbacken auf die Nockenwelle zu bewegbar ist. In den drei Spannbacken können ausfahrbare Fixierstifte vorgesehen sein, die in ausgefahrenem Zustand gegen die Außenwelle und gegen die Innenwelle oder nur gegen die Innenwelle verspannbar sind.

Problematisch bei den bekannten Rotorlagerungen ist, dass das Spannen des Rotorlagers in der Regel händisch erfolgt, indem das Lager mittels Bolzen in seiner Position gehalten wird. Die Bolzen können ihre Position verändern, was wiederum in einer unsicheren Rotorlagerung resultiert.

Der Erfindung liegt die Aufgabe zugrunde, eine reproduzierbare, sichere und schnelle Rotorlagerspannvorrichtung bereitzustellen.

Gelöst wird die Aufgabe durch die Merkmale des Anspruchs 1. Bevorzugte Ausgestaltungen sind in den abhängigen Ansprüchen beschrieben.

Die Aufgabe wird erfindungsgemäß dadurch gelöst, dass eine Vorrichtung zur Aufnahme und zum Spannen eines Rotorlagers bereitgestellt wird, mit wenigstens einem quer zu einer Lagerachse des Rotorlagers liegenden Lagerbock, einem zur Aufnahme des Rotorlagers ausgebildeten Lagerelement, einem Spannarm und einer Verriegelungsvorrichtung, wobei der Spannarm ein Eingriffselement aufweist, mit dem er in Eingriff mit dem Rotorlager bingbar ist und wobei die Verriegelungsvorrichtung wenigstens zwei Eingriffselemente umfasst, die radial beweglich im Lagerelement vorliegen und durch Betätigung der Verriegelungsvorrichtung in radiale Aufnahmen im Rotorlager einbringbar sind, so dass ein von dem Lagerelement aufnehmbares Rotorlager durch die Eingriffselemente des Spannarms und der Verriegelungsvorrichtung spannbar ist, wobei der Spannarm beweglich ausgebildet ist und aus einer Beladeposition, in der das Lagerelement für die Aufnahme des Rotorlagers zugänglich ist, in eine Spannposition schwenkbar ist, in der er mit dem aufgenommenen Rotorlager in Eingriff bringbar ist. Durch Betätigung der Verriegelungsvorrichtung ist das Spannen und Entspannen des Rotorlagers in einfacher Weise kontrolliert möglich. Es wird eine stabile und sichere Spannung erreicht, die auch automatisiert erfolgen kann. Eine manuelle Betätigung der Verriegelungsvorrichtung ist ebenfalls reproduzierbar möglich. Hierdurch können die bei dem manuellen Einführen der Bolzen in eine Spannvorrichtung auftretenden Fehler vermieden werden, wie zum Beispiel nicht reproduzierbare Positionierung der Bolzen, Verrutschen der Bolzen, usw.

In einer Ausgestaltung kann vorgesehen sein, dass die Vorrichtung zwei separate Verriegelungsvorrichtungen mit je einem Eingriffselement umfasst, die radial beweglich im Lagerelement vorliegen und durch Betätigung der Verriegelungsvorrichtungen in radiale Aufnahmen im Rotorlager einbringbar sind, so dass ein von dem Lagerelement aufnehmbares Rotorlager durch die Eingriffselemente des Spannarms und der Verriegelungsvorrichtungen spannbar ist.

Der Spannarm ist beweglich ausgebildet und aus einer Beladeposition, in der das Lagerelement für die Aufnahme des Rotorlagers zugänglich ist, in eine Spannposition schwenkbar, in der er mit dem aufgenommenen Rotorlager in Eingriff bringbar ist. Nach der Beladung kann der Spannarm wieder in Spannposition bewegt werden, in der er in Eingriff mit dem Rotorlager bringbar ist.

Um eine Wirkverbindung zwischen Spannarm und Rotorlager herzustellen, kann das Eingriffselement des Spannarms beweglich im Spannarm gelagert sein und aus einer Entriegelungsposition in eine Verriegelungsposition bewegbar sein, in der es mit einer im Rotorlager vorliegenden Aufnahme in Eingriff bringbar ist. Das Eingriffselement kann zum Beispiel als Bolzen in einer im Spannarm verlaufenden Bohrung vorliegen und und mit einer elektromotorischen Einheit, wie einem Motor gekoppelt sein, so dass der Bolzen automatisch oder manuell aus einer Entriegelungsposition in eine Verriegelungsposition gebracht werden kann, in der es mit einer im Rotorlager vorliegenden Aufnahme in Eingriff bringbar ist.

In einer Ausgestaltung ist vorgesehen, dass das Eingriffselement des Spannarms als ein an einem Kopfteil des Spannarms ausgebildeter feststehender Bolzen vorgesehen ist. Der Spannarm kann einen Kopfteil aufweisen, an dem ein feststehendes und beispielsweise als Bolzen ausgestaltetes Eingriffselement vorliegt. Der Spannarm kann nach dem Beladen der Vorrichtung aus der Beladeposition in die Spannposition bewegt werden, in der das Eingriffselement mit einer im Rotorlager vorliegenden Aufnahme interagiert.

Die erfindungsgemäße Vorrichtung weist insbesondere eine Verriegelungsvorrichtung auf, die mindestens zwei Eingriffselemente bewegt, wobei die Verriegelungsvorrichtung in einer Ausgestaltung einen Aktuator oder mehrere Aktuatoren umfasst. Bei dieser Ausgestaltung bewegt ein Aktuator ein Eingriffselement oder mehrere Eingriffselemente. Es kann jedoch auch vorgesehen sein, dass die Vorrichtung zwei Verriegelungsvorrichtungen mit je einem mit einem Eingriffselement in Wirkverbindung stehenden Aktuator aufweist, die durch Betätigung eine radiale Bewegung der Eingriffselemente bewirken. Die Verriegelungsvorrichtungen, bzw. die Aktuatoren können über eine Steuereinheit synchron oder asynchron angesteuert werden, so dass die Bewegung der Eingriffselemente zeitlich synchron ablaufen kann, aber nicht muss. Ein Aktuator ist insbesondere eine antriebstechnische Baueinheit, die ein elektrisches Signal in mechanische Bewegung umsetzt und kann beispielsweise als elektromechanischer Hubzylinder ausgestaltet sein, der über ein Gelenke aufweisendes Gestänge mit dem Eingriffselement oder den Eingriffselementen wirkverbunden ist und eine lineare Bewegung der Eingriffselemente bewirkt.

Ferner betrifft die Erfindung eine Auswuchtmaschine zur Bestimmung einer Unwucht eines Rotors und deren Ausgleich, mit wenigstens einer Vorrichtung zur Aufnahme und zum Spannen eines Rotorlagers wie zuvor erläutert. Die zuvor genannten Ausgestaltungen und Vorteile sind analog auf die Gestaltung und Vorteile der Auswuchtmaschine anzuwenden.

Um eine Einstellbarkeit der Vorrichtung zu gewährleisten, kann es vorteilhaft sein, dass die Vorrichtung zur Aufnahme und zum Spannen eines Rotorlagers auf einem Maschinengestell längs der Rotorlagerachse verschiebbar angeordnet ist. Die Vorrichtung kann hierfür beispielsweise auf einem Schlitten angeordnet sein, der auf dem Maschinengestell verschiebbar ist. Hierdurch kann die Vorrichtung längs der Rotorlagerachse bewegt werden.

Außerdem kann eine laterale Bewegung der Vorrichtung vorteilhaft sein, die beispielswese dadurch erreichbar ist, dass die Vorrichtung zur Aufnahme und zum Spannen eines Rotorlagers auf einem Maschinengestell quer zur Rotorlagerachse verschiebbar angeordnet ist. Hierbei kann die Vorrichtung auf einem weiteren Schlitten befestigt sein, der zusätzlich oder alternativ zur Längsbewegung der Vorrichtung eine Bewegung quer zur Rotorlängsachse ermöglicht.

Die Erfindung wird nachfolgend anhand eines Ausführungsbeispiels der Erfindung näher erläutert, das in der Zeichnung dargestellt ist. Es zeigen
- Figur 1: eine Ausgestaltung einer Vorrichtung in offener Stellung,
- Figur 2: eine Ausgestaltung einer Vorrichtung in geschlossener Position und
- Figur 3: eine Ausgestaltung einer Vorrichtung mit verspanntem Rotorlager.

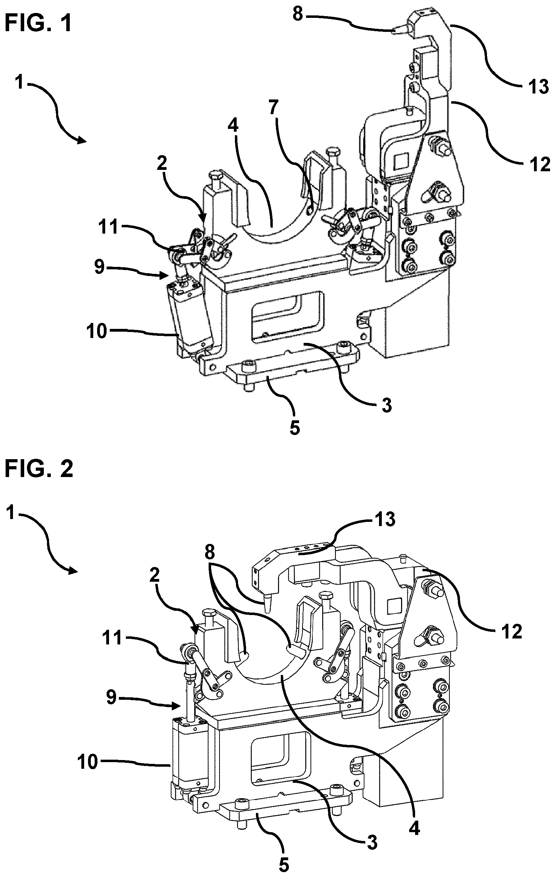

Figur 1 zeigt eine Ausgestaltung einer Vorrichtung zur Aufnahme und zum Spannen eines Rotorlagers in offener Beladeposition und Figur 2 eine Ausgestaltung einer Vorrichtung in geschlossener Spannposition. Die Vorrichtung 1 umfasst einen Lagerbock 2, der durch ein Basiselement 3 unterstützt wird. Der Lagerbock 2 trägt ein Lagerelement 4, das reversibel oder irreversibel mit dem Lagerbock 2 verbunden ist. Das Basiselement 3 kann an seiner Unterseite ein plattenförmig gestaltetes Verbindungsteil 5 aufweisen, mit dem das Basiselement 3 an ein Maschinengestell einer Auswuchtmaschine befestigbar ist. Auch ist das Basiselement 3 hierüber mit einem beweglich gelagerten Schlitten verbindbar, der verschiedenartige Bewegungen des Lagerbocks 2 ermöglicht.

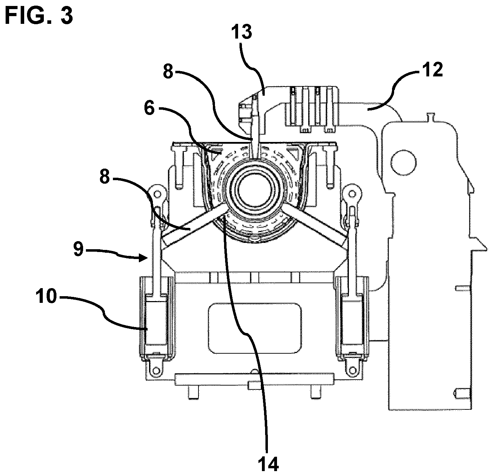

Das Lagerelement 4 ist als halbrunde, bzw. offene halbzylindrische Lagerschale ausgebildet, die zur Aufnahme und Lagerung eines in Figur 3 dargestellten Rotorlagers 6 mit horizontaler Achsrichtung vorgesehen ist. In der Lagerschale können Anpassmittel und Mittel zum Einführen des Rotorlagers 6 vorliegen, die das Einsetzen verschiedenartig gestalteter Rotorlager vereinfachen. Die Lagerschale weist zumindest zwei radial erlaufende Bohrungen 7, insbesondere Durchgangsbohrungen auf, in denen jeweils ein Bolzen als Eingriffselement 8 radial beweglich vorliegt. Das Eingriffselement 8 kann stabförmig ausgebildet sein und ein spitz zulaufendes, abgerundetes oder flaches freies Ende aufweisen. Das Eingriffselement 8 ist Bestandteil oder verbunden mit einer Verriegelungsvorrichtung 9, die an dem Lagerbock 2 oder dem Basiselement 3 befestigt sein kann. Die Verriegelungsvorrichtung 9 umfasst einen Aktuator 10, der in der dargestellten Ausgestaltung als elektromechanischer Hubzylinder ausgebildet ist. Des

Weiteren kann die Verriegelungsvorrichtung 9 Gelenke und Gestänge 11 aufweisen. In der dargestellten Ausgestaltung ist der Kolben des Hubzylinders über Gelenke und das beweglich gestaltete Gestänge 11 mit dem Eingriffselement 8, insbesondere dem Bolzen wirkverbunden, wobei jeweils eine Verriegelungsvorrichtung 9 bzw. ein Aktuator 10 mit jeweils einem Bolzen 8 verbunden ist. Es kann jedoch auch vorgesehen sein, dass beide Eingriffselemente 8, insbesondere Bolzen über einen Aktuator 10 betätigt werden. Die Bewegung des Aktuators 10 kann über eine nicht dargestellte Steuervorrichtung automatisch gesteuert werden. Die Steuervorrichtung kann nebst entsprechender Hard- und Software Bestandteil einer nicht dargestellten Auswuchtmaschine sein. Ferner können Sensoren vorgesehen sein, die die Position des Aktuators bzw. der Eingriffselemente 8 erfassen und an eine mit der Steuervorrichtung verbundenen Auswerteeinheit senden.

Eine Betätigung der Verriegelungsvorrichtung 9 führt zu einer Hubbewegung des Aktuators 10 und einer Positionsveränderung bzw. Bewegung des Gestänges 11, was wiederum in einer radialen Bewegung des Eingriffselements 8 resultiert. Die Verriegelungsvorrichtung 9 kann auch derart gestaltet sein, dass die lineare Bewegung der Eingriffselemente 8 elektromotorisch durch z. B. einen Linearmotor oder dergleichen erreicht wird.

An dem Basiselement 3 ist ferner ein Spannarm 12 befestigt, der schwenkbar gestaltet ist. Die Bewegung des Spannarms 12 kann ebenfalls über eine nicht gezeigte Steuervorrichtung automatisch steuerbar sein. Es kann jedoch auch vorteilhaft sein, dass der Spannarm 12 manuell bewegt wird. Der Spannarm 12 kann in seinen maximalen Auslenkungen reversibel verrasten. An seinem freien Ende weist der Spannarm 12 einen als Spannkopf 13 gestalteten Kopfteil auf, der über Befestigungsmittel, Rast- oder Steckverbindungen mit dem Spannarm 12 verbunden ist. Der Spannkopf 13 weist ein in Richtung des Lagerelements 4 hin ausgerichtetes Eingriffselement 8 auf, dass in dem dargestellten

Ausführungsbeispiel als Bolzen ausgebildet ist. Es kann vorgesehen sein, dass die Endposition des Eingriffselementes 8 des Spannkopfs 13 über Einstellmittel verstellbar ist. Ferner kann der Spannarm 12 in seiner Höhe sprich vertikal verstellbar sein.

Die erfindungsgemäße Vorrichtung 1 liegt in einer Beladeposition und in einer Spannposition vor, wobei die Beladeposition von der Figur 1 und die Spannposition von der Figur 2 illustriert werden. Kennzeichnend für die Beladeposition ist, dass das Lagerelement 4 für die Aufnahme eines Rotorlagers 6 zugänglich ist. Um das Einbringen des Rotorlagers 6 in das Lagerelement 4 zu vereinfachen, kann es vorteilhaft sein, wenn die Eingriffselemente 8 in das Lagerelement 4, sprich in den in dem Lagerelement 4 eingebrachten Bohrungen 7 eingefahren sind. Das heißt die Bolzen sind in der Lagerschale versenkt. Gleiches gilt für den Spannarm 12, der in der Beladeposition in einer Stellung vorliegt, in der das Lagerelement 4 für ein Rotorlager 6 zugänglich ist.

Figur 3 zeigt eine Ausgestaltung einer Vorrichtung 1 mit verspanntem Rotorlager 6. Das zu spannende Rotorlager 6 weist mindestens zwei, vorzugsweise drei Aufnahmen 14 für Eingriffselemente 8 auf. Die Aufnahmen 14 verlaufen radial im Rotorlager 6. Das zu spannende Rotorlager 6 wird in die Lagerschale des Lagerelements 4 eingesetzt, die sich vorzugsweise in der Beladeposition befindet, in der die Eingriffselemente 8 eingefahren sind und sich der Spannarm 12 in der Beladeposition befindet, in der die Lagerschale zugänglich ist. Das Rotorlager 6 kann Zentrierungsmittel aufweisen, die das Einsetzen des Rotorlagers 6 in der korrekten Position, in der die Aufnahmen 14 konzentrisch zu den Bohrungen 7 des Lagerelements 4 liegen, vereinfachen. Sobald sich das Rotorlager 6 in der korrekten Position befindet, wird die Verriegelungsvorrichtung 9 betätigt, sodass die als Bolzen gestalteten Eingriffselemente 8 durch eine Bewegung des Aktuators 10 radial in die Aufnahmen 14 des Rotorlagers 6 bewegt werden. Ferner wird der Spannarm 12 aus der Beladeposition in die Spannposition verschwenkt, in der sein Eingriffselement 8, insbesondere ein Bolzen mit einer entsprechend ausgerichteten Aufnahme 14 im Rotorlager 6 in Eingriff gelangt.

In einer Ausgestaltung kann vorgesehen sein, dass die Betätigung der Verriegelungsvorrichtung 9 sowie die Bewegung des Spannarms 12 gleichzeitig und insbesondere automatisch erfolgen. Es kann jedoch auch vorgesehen sein, dass diese nacheinander durchgeführt werden. Auch können die Bewegungen zueinander koordiniert erfolgen, indem beispielsweise die Bewegung des Spannarms 12 von seiner Beladeposition in seine Spannposition automatisch die Betätigung der Verriegelungsvorrichtung 9 auslöst und das Spannen des Rotorlagers 6 bewirkt. Die geometrische Gestalt der Bolzen, sprich der Eingriffselemente 8 ist an die in dem Rotorlager 6 vorliegenden Aufnahmen 14 angepasst, insbesondere was deren Länge und Durchmesser betrifft. Es können universell passende Eingriffselemente 8 zur Verfügung gestellt werden, die in eine Vielzahl von Rotoraufnahmen einführbar sind. Um eine sichere Verspannung des Rotorlagers 6 zu unterstützen, kann vorgesehen sein, dass die Verriegelungsvorrichtung 9 in der Spannposition, in der die Eingriffselemente 8 in die Aufnahmen 14 des Rotorlagers 6 eingreifen, mechanisch arretiert. Hierdurch wird ein ungewolltes Lösen der Verriegelungsvorrichtung 9 sowie der Eingriffselemente und folglich ein Entspannen des Rotorlagers 6 verhindert.

## Patentansprüche

1. Vorrichtung (1) zur Aufnahme und zum Spannen eines Rotorlagers (6) mit wenigstens einem quer zu einer Lagerachse des Rotorlagers (6) liegenden Lagerbock (2), der durch ein Basiselement (3) unterstützt wird, einem zur Aufnahme des Rotorlagers (6) ausgebildeten Lagerelement (4), einem Spannarm (12) und einer Verriegelungsvorrichtung (9), wobei der Spannarm (12) ein Eingriffselement (8) aufweist, mit dem er in Eingriff mit dem Rotorlager (6) bingbar ist und wobei die Verriegelungsvorrichtung (9) wenigstens zwei Eingriffselemente (8) umfasst, die radial beweglich im Lagerelement (4) vorliegen und durch Betätigung der Verriegelungsvorrichtung (9) in radiale Aufnahmen (14) im Rotorlager (6) einbringbar sind, so dass ein von dem Lagerelement (4) aufnehmbares Rotorlager (6) durch die Eingriffselemente (8) des Spannarms (12) und der Verriegelungsvorrichtung (9) spannbar ist, wobei der Spannarm (12) beweglich ausgebildet ist, **dadurch gekennzeichnet, dass** der Spannarm (12) an dem Basiselement (3) befestigt ist und aus einer Beladeposition, in der das Lagerelement (4) für die Aufnahme des Rotorlagers (6) zugänglich ist, in eine Spannposition schwenkbar ist, in der er mit dem aufgenommenen Rotorlager (6) in Eingriff bringbar ist.

2. Vorrichtung (1) nach Anspruch 1, **dadurch gekennzeichnet, dass** das Eingriffselement (8) des Spannarms (12) beweglich im Spannarm (12) gelagert ist und aus einer Entriegelungsposition in eine Verriegelungsposition bewegbar ist, in der es mit einer im Rotorlager (6) vorliegenden Aufnahme (14) in Eingriff bringbar ist.

3. Vorrichtung (1) nach Anspruch 2, **dadurch gekennzeichnet, dass** das Eingriffselement (8) des Spannarms (12) als ein an einem Kopfteil (13) des Spannarms (12) ausgebildeter feststehender Bolzen vorgesehen ist.

4. Vorrichtung (1) nach einem oder mehreren der vorhergehenden Ansprüche, **dadurch gekennzeichnet, dass** das Lagerelement (4) als halbrunde Lagerschale gestaltet ist.

5. Vorrichtung (1) nach einem oder mehreren der vorhergehenden Ansprüche, **dadurch gekennzeichnet, dass** im Lagerelement (4) radial verlaufende und die Eingriffselemente (8) beherbergende Bohrungen (7) vorliegen.

6. Vorrichtung (1) nach einem oder mehreren der vorhergehenden Ansprüche, **dadurch gekennzeichnet, dass** die Vorrichtung (1) zwei Verriegelungsvorrichtungen (9) mit je einem mit einem Eingriffselement (8) in Wirkverbindung stehenden Aktuator (10) aufweist, die durch Betätigung eine radiale Bewegung der Eingriffselemente (8) bewirken.

7. Auswuchtmaschine zur Bestimmung einer Unwucht eines Rotors und deren Ausgleich, mit wenigstens einer Vorrichtung (1) zur Aufnahme und zum Spannen eines Rotorlagers (6) nach einem oder mehreren der vorgehenden Ansprüche 1 bis 6.

8. Auswuchtmaschine nach Anspruch 7, **dadurch gekennzeichnet, dass** die Vorrichtung (1) zur Aufnahme und zum Spannen eines Rotorlagers (6) auf einem Maschinengestell längs einer Rotorlagerachse verschiebbar angeordnet ist.

9. Auswuchtmaschine nach den Ansprüchen 7 oder 8, **dadurch gekennzeichnet, dass** die Vorrichtung (1) zur Aufnahme und zum Spannen eines Rotorlagers (6) auf einem Maschinengestell quer zur Rotorlagerachse verschiebbar angeordnet ist.

## Claims

1. Device (1) for receiving and clamping a rotor bearing (6), comprising at least one bearing block (2) that is located transversely to a bearing axis of the rotor bearing (6) and is supported by a base element (3), a bearing element (4) designed to receive the rotor bearing (6), a clamping arm (12) and a locking device (9), the clamping arm (12) having an engagement element (8) by means of which it can be brought into engagement with the rotor bearing (6), and wherein the locking device (9) comprises at least two engagement elements (8) which are radially movable in the bearing element (4) and by actuation of the locking device (9) can be introduced into radial receptacles (14) in the rotor bearing (6), such that a rotor bearing (6) which can be received by the bearing element (4) can be clamped by the engagement elements (8) of the clamping arm (12) and of the locking device (9), wherein the clamping arm (12) is movable, **characterized in that** the clamping arm (12) is attached to the base element (3) and can be pivoted from a loading position, in which the bearing element (4) is accessible for the receiving of the rotor bearing (6), into a clamping position, in which it can be brought into engagement with the received rotor bearing (6).

2. Device (1) according to claim 1, **characterized in that** the engagement element (8) of the clamping arm (12) is mounted such that it can move in the clamping arm (12) and can be moved out of a unlocking position into a locking position, in which it can be engaged with a receptacle (14) present in the rotor bearing (6).

3. Device (1) according to claim 2, **characterized in that** the engagement element (8) of the clamping arm (12) is provided as a fixed stud formed on a head part (13) of the clamping arm (12).

4. Device (1) according to one or more of the preceding claims, **characterized in that** the bearing element (4) is designed as a semi-circular bearing shell.

5. Device (1) according to one or more of the preceding claims, **characterized in that** bores (7) running radially and accommodating the engagement elements (8) are present in the bearing element (4).

6. Device (1) according to one or more of the preceding claims, **characterized in that** the device (1) has two locking devices (9) each having an actuator (10) operatively connected to an engagement element (8), which devices (9) cause a radial movement of the engagement elements (8) when actuated.

7. A balancing machine for determining the unbalance of a rotor and correcting it, with at least one device (1) for the receiving and clamping of a rotor bearing (6) according to one or more of the preceding claims 1 to 6.

8. A balancing machine according to claim 7, **characterized in that** the device (1) for the receiving and clamping of a rotor bearing (6) is arranged on a machine frame such that it can be displaced along a rotor bearing axis.

9. A balancing machine according to claims 7 or 8, **characterized in that** the device (1) for the receiving and clamping of a rotor bearing (6) on a machine frame is arranged such that it can be displaced transversely to the rotor bearing axis.

## Revendications

1. Dispositif (1) pour la réception et le serrage d'un palier de rotor (6) avec au moins un support de palier (2) situé transversalement à un axe de palier du palier de rotor (6) et soutenu par un élément de base (3), un élément de palier (4) conçu pour recevoir le palier de rotor (6), un bras de serrage (12) et un dispositif de verrouillage (9), le bras de serrage (12) étant muni d'un élément d'engagement (8) avec lequel il peut être mis en prise avec le palier de rotor (6), et le dispositif de verrouillage (9) comprenant au moins deux éléments d'engagement (8) qui sont mobiles radialement dans l'élément de palier (4) et qui peuvent être introduits dans des logements radiaux (14) dans le palier de rotor (6) par actionnement du dispositif de verrouillage (9) de sorte qu'un palier de rotor (6) pouvant être reçu par l'élément de palier (4) peut être serré par les éléments d'engagement (8) du bras de serrage (12) et du dispositif de verrouillage (9), le bras de serrage (12) étant conçu mobile, **caractérisé en ce que** le bras de serrage (12) est fixé à l'élément de base (3) et peut pivoter d'une position de chargement, dans laquelle l'élément de palier (4) est accessible pour recevoir le palier de rotor (6), à une position de serrage, dans laquelle il peut être mis en prise avec le palier de rotor (6) reçu.

2. Dispositif (1) selon la revendication 1, **caractérisé en ce que** l'élément d'engagement (8) du bras de serrage (12) est monté mobile dans le bras de serrage (12) et peut être déplacé d'une position de déverrouillage à une position de verrouillage dans laquelle il peut être mis en prise avec un logement (14) présent dans le palier de rotor (6).

3. Dispositif (1) selon la revendication 2, **caractérisé en ce que** l'élément d'engagement (8) du bras de serrage (12) est prévu sous la forme d'une cheville fixe formée sur une partie de tête (13) du bras de serrage (12).

4. Dispositif (1) selon l'une ou plusieurs des revendications précédentes, **caractérisé en ce que** l'élément de palier (4) est conçu comme une coquille de palier semi-circulaire.

5. Dispositif (1) selon l'une ou plusieurs des revendications précédentes, **caractérisé en ce que** des alésages (7) s'étendant radialement et abritant les éléments d'engagement (8) sont présents dans l'élément de palier (4).

6. Dispositif (1) selon l'une ou plusieurs des revendications précédentes, **caractérisé en ce que** le dispositif (1) est muni de deux dispositifs de verrouillage (9) comportant chacun un actionneur (10) en liaison fonctionnelle avec un élément d'engagement (8), et dont l'actionnement provoque un déplacement radial des éléments d'engagement (8).

7. Machine d'équilibrage pour déterminer un déséquilibre d'un rotor et le compenser, comprenant au moins un dispositif (1) pour la réception et le serrage d'un palier de rotor (6) selon l'une ou plusieurs des revendications précédentes 1 à 6.

8. Machine d'équilibrage selon la revendication 7, **caractérisée en ce que** le dispositif (1) pour la réception et le serrage d'un palier de rotor (6) est disposé sur un bâti de machine de manière à pouvoir être déplacé le long d'un axe de palier de rotor.

9. Machine d'équilibrage selon les revendications 7 ou 8, **caractérisée en ce que** le dispositif (1) pour la réception et le serrage d'un palier de rotor (6) est disposé sur un bâti de machine de manière à pouvoir être déplacé transversalement à l'axe du palier de rotor.
